(19) Europäisches Patentamt
European Patent Office
Office européen des brevets

(11) **EP 1 103 882 B1**

(12) **EUROPÄISCHE PATENTSCHRIFT**

(45) Veröffentlichungstag und Bekanntmachung des Hinweises auf die Patenterteilung:
**05.03.2008  Patentblatt 2008/10**

(51) Int Cl.:
***G06F 1/14*** *(2006.01)*          ***G06F 1/12*** *(2006.01)*

(21) Anmeldenummer: **00123780.9**

(22) Anmeldetag: **02.11.2000**

(54) **Verfahren zum Synchronisieren von Computeruhren**

Method for sysnchronizing computer clocks

Procédé de synchronisation des horloges des ordinateurs

(84) Benannte Vertragsstaaten:
**AT BE CH CY DE DK ES FI FR GB GR IE IT LI LU MC NL PT SE TR**

(30) Priorität: **29.11.1999  DE 19957357**

(43) Veröffentlichungstag der Anmeldung:
**30.05.2001  Patentblatt 2001/22**

(73) Patentinhaber: **Alcatel Lucent
75008 Paris (FR)**

(72) Erfinder: **Neuerburg, Gerhard
70180 Stuttgart (DE)**

(74) Vertreter: **Kohler Schmid Möbus
Patentanwälte
Ruppmannstrasse 27
70565 Stuttgart (DE)**

(56) Entgegenhaltungen:
**US-A- 5 907 685**

- **K. ARVIND: "Probabilistic Clock Synchronization in Distributed Systems" IEEE TRANSACTIONS ON PARALLEL AND DISTRIBUTED SYSTEMS, Bd. 5, Nr. 5, Mai 1994 (1994-05), Seiten 474-487, XP002293491**
- **LEVINE J: "Time synchronization over the Internet using autolock" FREQUENCY CONTROL SYMPOSIUM, 1998. PROCEEDINGS OF THE 1998 IEEE INTERNATIONAL PASADENA, CA, USA 27-29 MAY 1998, NEW YORK, NY, USA,IEEE, US, 27. Mai 1998 (1998-05-27), Seiten 241-249, XP010305543 ISBN: 0-7803-4373-5**
- **H. KOPETZ, A. KRÜGER, D. MILLINGER, A. SCHEDL: "A Synchronization Strategy for Time-Triggered Multicluster Real-Time System" IEEE, 1995, Seiten 154-161, XP002293492**

EP 1 103 882 B1

**Beschreibung**

Die Erfindung betrifft ein Verfahren zum Synchronisieren der lokalen Uhren mehrerer Computereinheiten, die ein Computersystem bilden, wobei die Computereinheiten über einen Bus kommunizieren.

Heutige Rechnersysteme werden zunehmend modularer und kommunizieren zunehmend über standardisierte Datenbusse. Bei Echtzeitsystemen ensteht dabei häufig das Problem der zeitgenauen Synchronisierung der beteiligen Rechnermodule.

Häufig lautet die Aufgabenstellung, dass die Uhren der miteinander kommunizierenden Einheiten mit bestimmter Toleranz auf eine in einer Einheit befindliche massgebende Uhr synchronisiert werden sollen (direkte Korrektur), oder dass die gegenseitigen Abweichungen detektiert werden und bei der Übertragung von Zeitinformationen gegenseitig berücksichtigt werden (indirekte Korrektur).

Je nach verwendetem Bussystem können unterschiedliche Lösungen realisiert werden. Erlaubt der Bus "harte" (d.h. sofortige) Interrupts des normalen Datenverkehrs, so ist eine schnelle Zeit- Informationsübertragung und damit eine recht genaue Synchronisierung möglich. Bei z.B. einem "prioritätsgesteuertem Bus" hängt die Übertragungszeit wesentlich von der aktuellen Buslast und der Vergabe von Prioritäten ab.

Wenn man von der Überlegung ausgeht, daß die Zeitsignale ohne Interrupt übertragen werden und der Sendertakt, der Bustakt und der Empfängertakt jeweils die gleiche Frequenz haben, so wird sich der Empfängertakt vom Sendertakt und Bustakt in Abhängigkeit von der jeweils zufälligen Einschaltzeit des betreffenden Empfängers unterscheiden. Dies führt dazu, daß beispielsweise einer der Empfänger ein Zeitsignal ganz kurze Zeit nach Beginn seiner Empfangstaktperiode empfängt, ein anderer Empfänger z.B. in einem mittleren Bereich der entsprechenden Empfangstaktperiode, und schließlich ein dritter Empfänger z.B. gegen Ende seiner Empfangstaktperiode empfängt, obwohl tatsächlich ein zu beachtender Laufzeitunterschied der Zeitsignale von dem Sender zu dem drei genannten Empfängern nicht vorhanden ist. Im folgenden wird davon ausgegangen, daß die Signallaufzeit über den Bus stets vernachlässigt werden kann. In solchen Fällen, in denen dies nicht der Fall ist, kann der Fachmann ohne Schwierigkeiten anhand seiner Fachkenntnisse die unten beschriebenen Ausführungsformen der Erfindung modifizieren.

Am Ort des Empfängers ist nicht bekannt, welcher der beispielhaft genannten Fälle vorliegt. Es ist lediglich anhand der Verzögerungszeiten der verschiedenen Komponenten des Senders, des Busses und der verschiedenen Empfänger, die vereinfachend alle als technisch gleich ausgebildet angesehen werden, bekannt, welches die kürzeste mögliche Verzögerungszeit ist, und welches die längstmögliche Verzögerungszeit ist.

Es ist recht wahrscheinlich, daß bei einem beliebigen bekannten System, bei dem Signale von einem sendenden Computer oder allgemeiner einer sendenden Daten verarbeitenden Stelle an andere Computer bzw. Datenverarbeitungseinrichtungen gegeben werden, der jeweilige Empfänger die Zeitsignale stets, wie oben beispielhaft erwähnt, z.B. sehr zeitig, oder aber stets z.B. in einem mittleren Verzögerungsbereich, oder stets z.B. recht spät empfängt. Daher stellen bei einer Übertragung der Zeitsignale ohne Interrupt die einzelnen empfangenden Computer unterschiedliche Zeitdifferenzen fest und stellen ihre Uhren auf unterschiedliche Zeiten ein. Dieses Verfahren ist daher für die Synchronisierung in vielen Fällen zu ungenau und daher nicht geeignet.

K. Arvind in IEEE Transactions on parallel and distributed systems, Bd. 5, Nr. 5, Mai 1994, S. 474-487 offenbart ein als PCS bezeichnetes Verfahren zum probabilistischen Synchronisieren von Uhren in verteilten Systemen. Die beschriebenen Uhren werden ausschließlich im Hinblick auf die Uhrendrift synchronisiert. Als probabilistisch wird das Verfahren bezeichnet, weil der Grenzwert für die maximal mögliche Driftrate nicht deterministisch festgelegt ist, sondern als Zufallsvariable behandelt wird. Die Verzögerungszeit von Nachrichten bei der Übertragung wird als Zufallsvariable beschrieben, deren Mittelwert und Standardabweichung bestimmt werden.

Der Erfindung liegt die Aufgabe zugrunde, ein Verfahren der eingangs genannten Art so auszubilden, daß Interrupt-Signale nicht benötigt werden und dennoch unterschiedliche empfangende Computer synchronisiert werden können. Diese Aufgabe wird gemäß der Erfindung mit einem Verfahren gemäß Anspruch 1 gelöst.

In dem Verfahren wird vorgesehen,

daß eine erste Computereinheit - Sender - Zeitsignale, die eine Zeitsignatur aufweisen, unter Verwendung eines Senderzyklus (Senderzykluszeitperiode, t_sender) zur Abholung durch den Bus bereitstellt,

daß der Bus unter Verwendung eines Buszyklus (Buszykluszeitperiode, t_bus) die ZeitSignale zu einer anderen Computereinheit - Empfänger - sendet,

daß der genannte Empfänger diese Zeitsignale unter Verwendung eines Empfängerzyklus (Empfängerzykluszeitperiode, t_receiver) liest, um eine Zeitdifferenz zwischen der lokalen Uhr des Senders und seiner lokalen Uhr festzustellen,

daß die Zeitdifferenz zwischen den genannten lokalen Uhren als Durchschnittswert (Mittelwert) von Zeitdifferenzen (= Meßwerten) einer spezifischen Anzahl der gelesenen Zeitsignale ermittelt wird, daß diese ermittelte Zeitdifferenz zum Synchronisieren verwendet wird, und

daß die Zeitsignale auf ihrem Weg vom Sender zum Empfänger mit variabler Verzögerung übertragen werden, derart, daß seitens des Empfängers aufeinander folgende Zeitsignale nicht stets an der gleichen Stelle des Empfangszyklus empfangen werden, sondern vorzugsweise beim Empfangen genügend vieler solcher Zeitsignale über die gesamte Breite des Empfangszyklus mehr oder weniger gleichmäßig verteilt. Wird nun eine Mittelwertbildung der einzelnen Verzögerungszeiten der Zeitsignale vorgenommen, so ergibt sich bei hinreichend vielen Werten als Ergebnis eine resultierende Zeitverzögerung, die in der Mitte zwischen der maximal möglichen und der minimal möglichen Zeitverzögerung liegt. Unabhängig von der zufälligen Lage des Empfangstakts der anderen Empfänger relativ zum Sendertakt stellen auch die anderen Empfänger die gleiche mittlere Zeitdifferenz fest, falls deren interne Uhren exakt gleich gehen. Somit ist verhindert, daß unterschiedliche Empfänger unterschiedliche Verzögerungzeiten berechnen. Ein Empfänger, dessen Uhr eine spätere Zeit anzeigt als bei einem anderen Empfänger, wird eine entsprechend größere mittlere Zeitdifferenz ermitteln. Die jedem Empfänger bekannte mittlere Verzögerungszeit kann nun in der jeweils gewünschten Weise zum Stellen der Uhr des empfangenden Computers oder lediglich zur Feststellung einer Verzögerungszeit, die für weitere Berechnungen verwendet wird, herangezogen werden.

Zur Erfindung gehören auch Ausführungsformen, bei denen anhand der oben genannten mittleren Verzögerungszeit weitere Korrekturen, vorzugsweise unter Berücksichtigung der kürzestmöglichen Zeitverzögerung, vorgenommen werden, um einen exakten Gleichlauf der Uhren zu erreichen.

In vereinfachter und weniger genauer Weise kann die "Ermittlung" der mittleren Zeitdifferenz erfindungsgemäß dadurch erfolgen, daß nur ein einziger Wert der Zeitdifferenz aus einer bestimmten Menge von Zeitdifferenzen oder Meßwerten genommen wird, und zwar der am nächsten zur Mitte zwischen der maximalen und der minimalen festgestellten Zeitdifferenz liegt. Dies mag für manche Anwendungsfälle ausreichen. Die Genauigkeit wird vergrößert, wenn ein Mittelwert aus einer Auswahl der gelesenen Zeitsignale gebildet wird (aus einem mittleren Bereich, aus den Extrembereichen der Zeitverzögerungen, oder aus allen Bereichen). Am größten ist normalerweise die Genauigkeit, wenn alle Zeitdifferenzen ausgewertet werden.

Die variable Verzögerung der Zeitsignale auf ihrem Weg zu den einzelnen Empfängern kann zentral auf der Seite eines einzigen angenommenen Senders vorgenommen werden. Es ist dann bei den Empfängern mit Ausnahme der Tatsache, daß diese durch geeignete Programmierung veranlaßt werden müssen, einen Mittelwert zu bilden, nichts weiter zu veranlassen. Bei einer anderen Ausführungsform der Erfindung wird die variable Verzögerung bei jedem Empfänger vorgesehen, so daß seitens des Senders keine Änderung erforderlich ist. Die Erfindung schließt nicht aus, daß Verzögerungsmaßnahmen für die Zeitsignale sowohl beim Sender als auch bei den Empfängern vorgesehen werden. Es könnte dabei erforderlich sein, durch genaue Berechnung der möglichen Verzögerungen darauf zu achten, daß nicht unerwünschte Beeinflussungen der beiden Verzögerungen auftreten.

Bei einer Ausführungsform der Erfindung werden die variablen Verzögerungen der Zeitsignale dadurch erreicht, daß aus der Gruppe Sendertaktperiode, Bustaktperiode und Empfängertaktperiode mindestens zwei der genannten Taktperioden derart unterschiedlich gewählt und dabei aufeinander abgestimmt sind, daß innerhalb eines gewissen Zeitbereichs eine für den jeweiligen Anwendungsfall ausreichend große Anzahl von Zeitsignalen an jeweils unterschiedlichen Stellen der einzelnen Empfängertaktperioden empfangen werden. Bei der Bemessung der einzelnen Taktperioden, die später anhand eines Beispiels noch genau erläutert wird, wird auch folgendes berücksichtigt: Die Mittelwertbildung soll nicht eine so lange Zeit in Anspruch nehmen, daß diese Zeit für die Zwecke des Betriebs der in Betracht gezogenen Anordnung zu lang ist, also nicht schnell genug einen Mittelwert bildet. Die Zeit soll auch nicht so lang sein, daß dann, wenn schließlich eine Mittelwert gebildet worden ist, dieser deswegen, weil infolge von Drift (z.B. wegen Alterung, Temperaturänderungen, Spannungsänderungen) die tatsächliche Verzögerungszeit inzwischen von der ermittelten mittleren Verzögerungszeit stark abweicht, nicht mehr aussagekräftig ist. Andererseits soll die Zeitspanne, innerhalb von der die Verzögerungszeiten von Zeitsignalen erfaßt werden, ausreichend lang sein, damit eine genügend große Genauigkeit möglich ist und nicht zu wenige Verzögerungszeiten zur Mittelwertbildung zur Verfügung stehen.

In einem Fall, wo die Erfindung bei einem bestehenden System verwirklicht werden soll, bei dem bereits eine für die Zwecke der Erfindung geeignete unterschiedliche Größe des Sendertakts, des Bustakts und des Empfängertakts vorhanden ist, ist es zur Verwirklichung der Erfindung lediglich noch erforderlich, eine Mittelwertbildung vorzunehmen.

Bei der Mittelwertbildung ist noch folgendes zu beachten: In aufeinander folgenden Empfängertaktperioden empfängt ein bestimmter Empfänger natürlich nicht stets dasselbe Zeitsignal (mit der selben eingeprägten Uhrzeit), sondern Zeitsignale, die die Zeit des Senders im Augenblick des Sendens enthalten. Die eingeprägten Uhrzeiten dieser Zeitsignale unterscheiden sich daher um Zeitdifferenzen (= Senderzykluszeit), die seitens des Empfängers bekannt sind. Dadurch wird verhindert, daß das selbe Zeitsignal mehrfach ausgewertet wird.

Schutz wird auch für ein Datenübertragungssystem beansprucht, das das erfindungsgemäße Verfahren anwendet, sowie für einen Sender, wie auch für einen Empfänger, die jeweils mit Einrichtungen zum Senden bzw. Empfangen von Zeitsignalen mit variabler Verzögerungszeit ausgebildet sind.

Weitere Ausführungsformen der Erfindung sind in den abhängigen Ansprüche spezifiziert.

Weitere Merkmale und Vorteile der Erfindung ergeben sich aus der nachfolgenden Beschreibung eines Ausführungsbeispiels der Erfindung anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein. Es zeigen

Fig. 1 ein Zeitdiagramm, daß schematisch aufeinander folgend abgegebenen Zeitsignale des Senders und deren Übernahme durch den Bus sowie die Übergabe an den Empfänger zeigt.

Fig. 2 als erste Stufe die Übertragung der Zeitsignale vom Sender zum Bus, der als ein Empfänger betrachtet wird. Die Lage der Zeitsignale und die Verzögerungen bei Übergabe an den Bus stimmen nicht mit deren der lediglich schematisch dargestellten Fig. 1 überein.

Fig. 3 als zweite Stufe die Übergabe der Zeitsignale vom Bus, der als ein Sender betrachtet wird, an den Empfänger.

Fig. 4 ein Blockschaltbild einer Nachrichtenverarbeitungsanlage mit einem Sender, einem Bus und mehreren Empfängern, wobei für die Erfindung wesentliche Komponenten dargestellt sind.

Zunächst werden die Grundlagen der Erfindung erläutert.

## 1 Überblick

Im folgenden soll ein Synchronisierungsverfahren für zyklische Bussysteme vorgestellt werden, das ohne Interruptsignale auskommt. Bei diesem Verfahren gibt eine Sendereinheit zyklisch mit einem bestimmten Sendezyklus Zeitsignale auf den Bus, der diese Signale mit seinem Buszyklus an die Empfängereinheit übergibt. Der Empfänger liest diese Signale mit einem bestimmten Empfängerzyklus ein.

In der Regel wird dabei jedes Zeitsignal unterschiedlich lang verzögert. Der Empfänger kann diese Verzögerungszeit nicht ermitteln; er kennt lediglich die minimale und maximal mögliche Verzögerungszeit.

Bei geeigneter Wahl der Sender- und Empfängerzykluszeiten entsteht bei Summation und Mittelung über eine bestimmte Anzahl dieser Telegramme (Zeitsignale) eine weitgehend deterministische Verzögerungszeit. Damit ist dann eine genaue Bestimmung der Gangdifferenz der Uhren in den beteiligten Einheiten möglich.

## 2 Kommunikation über zyklische Medien

### 2.1 Zyklische (deterministische) Bussysteme

Bei diesen Bussystemen wird ein fest projektierter Buszyklus eingestellt, bei dem jeweils zu definierten Zeiten innerhalb des Zyklus definierte Daten übergeben werden können, sogenannte "zyklische Daten". Viele dieser Bussysteme erlauben keine harten Interrupts des Senders; der Sender weiss also nicht genau, wann ein zum Bussystem gegebenes Datum tatsächlich losgeschickt wird. Sie sind meist lediglich in der Lage, bei Empfänger einen Interrupt auszulösen, sobald eine bestimmte Information angekommen ist.

In der Regel ist der Buszyklus in einen Teil für zyklische Daten und einen Teil für sporadische Daten unterteilt. Zyklische Daten werden immer zu gleicher Zeit innerhalb des Buszyklus übertragen.

Für die folgenden Überlegungen werden folgende Voraussetzungen angenommen:

- Die zu synchronisierenden n Einheiten (A, B, ..., X) schicken in jedem Buszyklus je ein Zeittelegramm, das die aktuelle Zeit der jeweiligen Einheit bei Bereitstellung des Telegramms zur Abholung durch den Bus enthält.

- Die n Zeittelegramme sollen so dicht hintereinander im Buszyklus erfolgen, daß die Zeitdauer zwischen dem Zeittelegramm 1 der ersten Einheit (A) und dem Zeittelegramm n der letzten Einheit (X) gegenüber der Buszykluszeit vernachlässigt werden kann; d.h. alle Zeittelegramme werden als zur gleichen Zeit ausgesandt angenommen. (Dies ist keine notwendige Bedingung für die folgenden Algorithmen; sie macht den Algorithmus aber wesentlich einfacher anwendbar)

### 2.2 Beschreibung des Zeit- Übertragungsprinzips

Die Sendereinheit sendet mit einem bestimmten, festen Sendezyklus Zeitsignale an andere Einheiten über den ebenfalls zyklisch übertragenden Bus aus. Diese Zeitsignale beinhalten die jeweils die aktuelle Zeit des Senders bei Bereitstellung an den Bus. Der (die) Empfänger fragt(en) den Bus ebenfalls mit seinem (ihrem) Senderzyklus nach dieser Zeitinformation ab und vergleicht(en) die Zeitinformation mit seiner (ihrer) eigenen Uhr. Dazu bildet(en) er (sie) die Differenz der empfangenen Zeitinformation zur eigenen beim Auslesen aktuellen Uhrzeit.

In der Praxis kann folgendes Verfahren dazu stattfinden:

Der Sender speichert die Zeitinformation zyklisch in einen Übergabespeicher zum Bus ab. Der Bus liest diesen Speicher mit seinem Buszyklus aus und speichert diese Information nach Übertragung in den (die) Übergabespeicher der Empfänger. Der (die) Empfänger ließt (lesen) diese(n) Ubergabespeicher wiederum zyklisch aus und vergleicht(en) die Zeitinformation der ausgelesenen Signale mit der internen Zeit zur Zeit des Auslesens. Der (die) Empfänger bildet (bilden) die Differenz zwischen empfangener Zeit und eigener Zeit.

Um diese Uhrzeiten vergleichen zu können, müssen die bei diesem Verfahren entstehenden Telegrammlaufzeiten berücksichtigt werden. Die Telegrammlaufzeit bzw. Informationsverzögerung ist dabei 2-stufig:

1. Stufe: Laufzeit Sender -> Bus

2. Stufe: Laufzeit Bus -> Empfänger

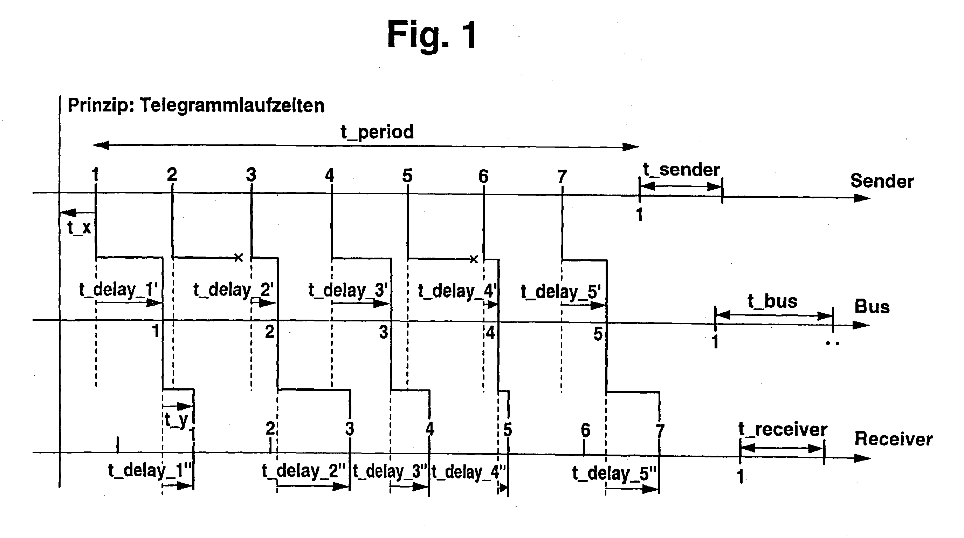

Fig. 1 macht deutlich, daß die Verzögerungen von Telegramm zu Telegramm unterschiedlich sind. Durch geeignete Wahl der Zykluszeiten zueinander und durch aufsummieren der Zeitinformationen über eine bestimme Anzahl von Telegrammen läßt sich allerdings eine weitgehend konstante Zeitverzögerung erreichen. Dadurch wird eine genaue Uhrensynchronisierung möglich.

### 2.3 Voraussetzungen und Definitionen

### Voraussetzungen

Es soll von folgender Voraussetzung ausgegangen werden:

1) t_sender = t_receiver
diese Voraussetzung ist sinnvoll, da jeder Empfänger auch zugleich Sender sein kann und deshalb ein symmetrisches Verfahren günstig ist.
Weiter soll folgende Voraussetzung erfüllt werden:
2) t_sender < t_bus

### Definition der Zeiteinheit (te)

Ohne Beschränkung der Allgemeinheit wird angenommen, die daß die Zykluszeiten t_bus und t_sender und t_receiver ganzzahlige Vielfache einer definierten Zeiteinheit (te) sind:

t_sender = TS * te
t_bus = TB * te
t_receiver = TR * te
Dabei sind TS, TB und TR natürliche Zahlen.

Die Zeiteinheit te wird so gewählt, daß sowohl TS (= TR) und TB teilerfremd werden. Dies ist eine wichtige Voraussetzung für die in Kap.3 folgenden Berechnungen.
Dazu wird der größte gemeinsame Teiler ggT sender, t_bus] bestimmt, der (formal) direkt die Zeiteinheit te ergibt.
*(Beispiel: t_bus = 64 ms = $2^6$ ms; t_sender = 50 ms = 2 * $5^2$ ms:*
*ggT = 2 ms; mit te = 2 ms folgt: TB = 32, TS = 25)*

### Resultierende Periodendauer:

Die resultierende Periodendauer gibt die Periode des Gesamtsystems an:

$$t\_period = TS * TB * te$$

*(Bei vorhergehendem Beispiel: t_period= 32 * 25 * 2 ms = 1.6 s)*

### 3 Telegrammlaufzeiten

### 3.1 Stufenschema

**1. Stufe:**

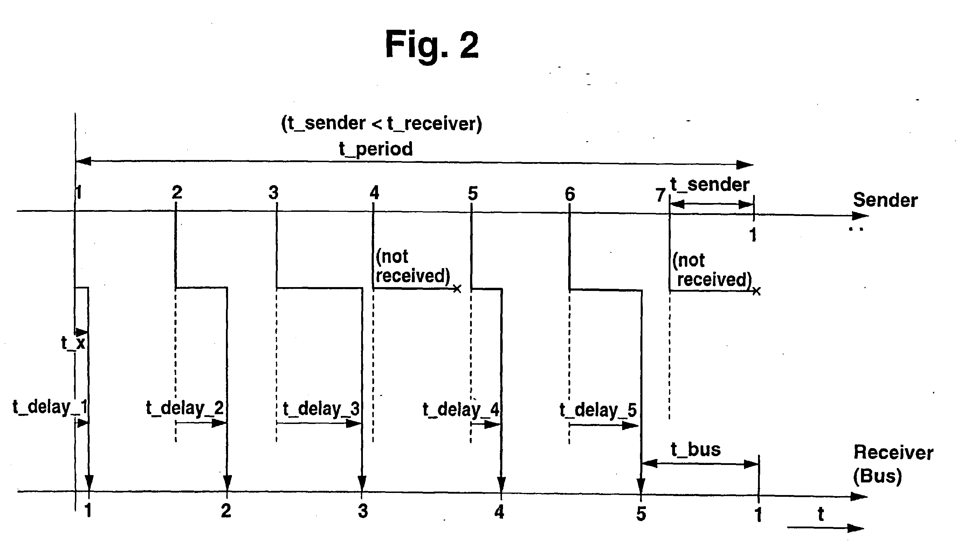

Die Anzahl der gesendeten Telegramme ist größer, als die Anzahl der übertragenden Telegramme, da der Buszyklus TB länger als der Senderzyklus TS ist. Der Sender sendet TB Telegramme innerhalb einer Periode aus. Der Bus überträgt TS Telegramme (Der Bus wird als 1. Empfängerstufe betrachtet).
*(Beispiel in Fig. 2: TS = 5, TB = 7;*
*von TR = 7 gesendeten Telegrammen werden TS = 5 Telegramme empfangen)*

**2. Stufe:**

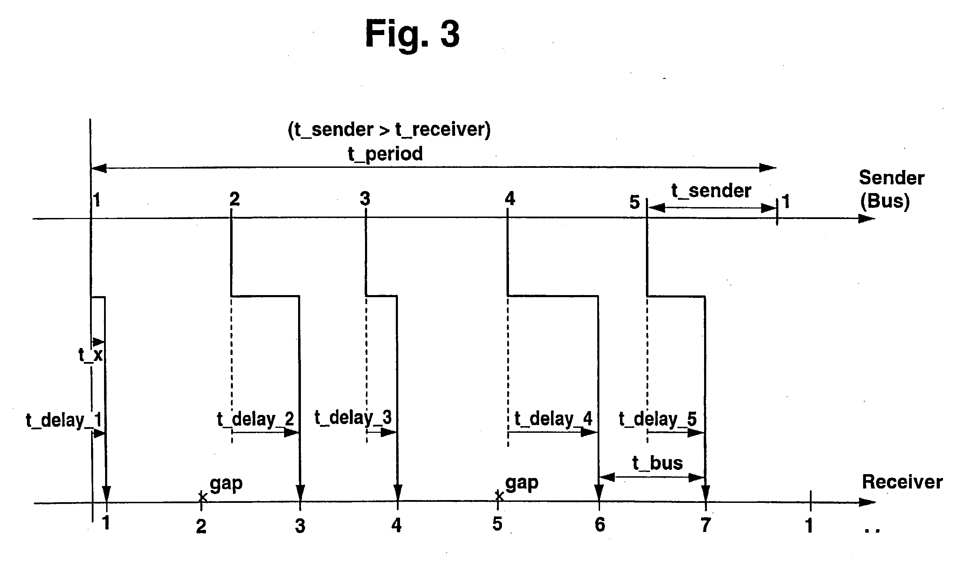

Hier kann der Bus als zyklischer Sender der Zeitinformation betrachtet werden. Er sendet zyklisch TS Telegramme innerhalb einer Periode aus. Da der Empfänger eine geringere Zykluszeit als der Bus hat, entstehen "Empfangslücken", d.h. nicht in jedem Buszyklus wird eine neue Zeitinformation übermittelt.
*(Beispiel in Fig. 3: TS = 7, TR = 5; von TR = 5 gesendeten Telegrammen werden alle Telegramme empfangen)*

**Phasenverschiebung t_x, t_y**

Es muß bei dem hier definierten Verfahren von beliebigen Phasenverschiebungen zwischen den 3 Zyklen ausgegangen werden.
Analog den Zykluszeiten sollen die Phasenverschiebungen als mit der oben bestimmten Zeiteinheit te zu multiplizierende Zahl aufgefaßt werden:

$$t\_x = ZX * te$$

$$t\_y = ZY * te$$

Da die Phasenverschiebung beliebig angenommen werden muß, sind ZX, ZY Elemente der reellen Zahlen.

### 3.2 Berechnung der mittleren Telegrammlaufzeit (t_delay)

Die Berechnung der Telegrammlaufzeiten (bzw. Delayzeiten) TD_i soll wieder in den 2 vorgestellten Stufen erfolgen:

**1. Stufe (Fig. 2):**

Der Bus wird als Empfänger betrachtet.
Anzahl der gesendeten Telegramme:  TB
Anzahl der empfangenen Telegramme:  TS
mit t_delay_i = TD_i * te folgt für die einzelnen Telegrammlaufzeiten:

$$TD\_1 = ZX$$

$$TD\_2 = (TB + ZX) \bmod TS$$

Allgemein für die k- te Laufzeit:

$$TD\_k = [(k-1) * TB + ZX] \bmod TS \qquad [3.2.1]$$

Summenbildung über alle empfangenen Telegrammlaufzeiten einer Periode:

$$\sum_{k=1}^{TS} TD\_k = \sum_{k=0}^{TS-1} (k * TB + ZX) \bmod TS \qquad [3.2.2]$$

Da TS und TB teilerfremd sind, kann mit ZX' = |ZX| mod 1 formuliert werden:

$$\sum_{k=1}^{TS} TD\_k = \sum_{k=0}^{TS-1} [(k * TB) \bmod TS] + TB * ZX'] \qquad [3.2.3]$$

wobei für ZX' gilt: $0 \leq ZX' < 1$

Weiter gilt mit

$$\sum_{k=0}^{TS-1} [(k * TB) \bmod TS] = [0+1+2+...+(TS-1)] = \tfrac{1}{2}(TS-1) * TS \qquad [3.2.4]$$

für den Mittelwert der Telegrammlaufzeit:

$$<TD> = (1/TS) \sum_{k=1}^{TS} TD\_k = \tfrac{1}{2}(TS-1) + ZX' \qquad [3.2.5]$$

$$t\_delay = <t\_delay\_i> = [\tfrac{1}{2}(TS-1) + ZX'] * te \qquad [3.2.6]$$

Wird ZX" = ZX' - 0.5 gewählt ergibt sich:

$$t\_delay = <t\_delay\_i> = [\tfrac{1}{2} TS + ZX"] * te \qquad [3.2.7]$$

mit

$$ZX": \qquad -0.5 \leq ZX" < 0.5$$

Dabei ist ½ TS der unabhängig von der Phasenlage der Zyklen deterministisch bestimmbare Anteil und ZX" der von der Phasenlage abhängige, nicht bestimmbare Anteil der mittleren Verzögerungszeit.

### 2. Stufe (Fig. 3):

Der Bus wird hier als zyklischer Sender aufgefaßt, der die Telegramme mit dem Zyklus TB versendet. Der Empfänger fragt den Bus mit seinem Empfängerzyklus ab.

Da der Empfänger mehr Telegramme empfangen kann, als vom Bus ausgesendet werden können, erhält der Empfänger nicht zu jeder Zykluszeit eine aktuelle Information; an einigen Stellen entstehen also "Empfangslücken".

Anzahl der gesendeten Telegramme:               TS
Anzahl der möglich zu empfangenen Telegrammen:         TB
Anzahl der wirklich empfangenen Telegramme:          TR (=TS)

1.) Um die oben hergeleiteten Gleichungen wieder benutzen zu können, müssen zunächst formal folgende Variablen vertauscht werden:

TB => ersetzt durch TR
TS => ersetzt durch TB
ZX => ersetzt durch ZY

2.) Laufzeiten, die größer als die Empfängerzykluszeit (TR) sind, können nicht entstehen. An diesen Stellen entstehen die Empfangslücken. Dies kann dadurch berücksichtigt werden, daß alle größeren Werte als TR -1 wieder abgezogen werden. Mit:

$$\sum_{k=0}^{TB-1} [(k * TR) \bmod TB] - [TR + (TR+1) + ... + (TB - 1)]$$

$$= [0 + 1 + ... + (TR - 1)] \qquad [3.2.8]$$

gilt für die Summenbildung über alle empfangenen TR Telegramme einer Periode:

$$\sum_{k=1}^{TR} TD\_k = \sum_{k=0}^{TB-1} [(k - 1) * TR] \bmod TB - \sum_{j=TR}^{TB-1} j + TR * ZY' \qquad [3.2.9]$$

$$= \tfrac{1}{2} * TB (TB - 1) - \tfrac{1}{2} [(TB - 1 + TR)(TB - TR)] + TR * ZY' \qquad [3.2.10]$$

$$= \tfrac{1}{2} * [(TB^2 - TB) - ((TB^2 - TR^2 - (TB - TR))] + TR * ZY' \qquad [3.2.11]$$

$$= \tfrac{1}{2} * [TR^2 - TR] + TR * ZY' \qquad [3.2.12]$$

wobei für ZY' gilt: $0 \leq ZY' < 1$

Damit gilt für den Mittelwert der Telegrammlaufzeit:

$$\langle TD \rangle = (1/TR) \sum_{k=1}^{TR} TD\_k = \tfrac{1}{2}(TR - 1) + ZY' \qquad [3.2.13]$$

$$t\_delay = \langle t\_delay\_i \rangle = [\tfrac{1}{2} TR + ZY''] * te \qquad [3.2.14]$$

mit ZY": $-0.5 \le ZY'' < 0.5$

Dabei ist ½ TR der unabhängig von der Phasenlage der Zyklen deterministisch bestimmbare Anteil und ZY" der von der Phasenlage abhängige, nicht bestimmbare Anteil der mittleren Verzögerungszeit.

**Summe der Laufzeiten beider Stufen:**

$$t\_delay = t\_delay\,(Stufe1) + t\_delay\,(Stufe2) =$$

$$[\tfrac{1}{2} TS + ZX''] * te + [\tfrac{1}{2} TR + ZY''] * te \qquad [3.2.15]$$

mit TS = TR folgt:

$$t\_delay = [TS + ZX'' + ZY''] * te \qquad [3.2.16]$$

Die mittlere Telegrammlaufzeit über eine Periode besteht also aus einem deterministischen Teil:

$$TS * te = t\_sender \qquad [3.2.17]$$

und einen von den Phasenverschiebungen abhängigen Teil:

$$(ZX'' + ZY'') * te \qquad [3.2.18]$$

Während der deterministische Anteil TS * te = t_sender konstant ist, ist der phasenabhängige Teil $t\_x = (ZX'' + ZY'') * te$ linear von der Größe der Zeiteinheit abhängig.

Im folgenden soll für ZX" + ZY" = Z gesetzt werden, wobei gilt: mit Z:

$$-1 \le ZY < 1 \text{ folgt}$$

$$t\_delay = [TS + Z] * te \qquad\qquad [3.2.19]$$

### 4 Beschreibung eines Synchronisationsalgorithmus

**Bestimmung der Uhrendifferenz (Gangdifferenz):**

Für alle empfangenen Zeittelegramme bestimmt der Empfänger die Differenz seiner jeweils aktuellen Empfangszeit t_rec (i) mit der gesendeten Zeitinformation t_send (i):

$$t\_diff\ (i) = t\_telegram\ (i) - t\_\ telegram\_receive\_(i)$$
$$= t\_send(i) + t\_delay\ (i) - t\_rec\ (i) \qquad\qquad [4.1]$$

Mit t_send - t_rec = t_offset ergibt sich:

$$t\_diff\ (i) = \ t\_offset - t\_delay\ (i) \qquad\qquad [4.2]$$

Summe und Mittelung über alle Zeitdifferenzen einer Periode ergibt mit [3.2.19]:

$$<t\_diff> = \ (1/TS) \sum_{k=1}^{TS} t\_diff\ (k) = [TS + Z] * te + t\_offset \qquad\qquad [4.3]$$

$$t\_offset = \ <t\_diff > - \ TS * te + Z * te \qquad\qquad [4.4]$$

mit $-1 \leq ZX' < 1$

Der Offset der Empfängeruhr gegenüber der Senderuhr kann also bis auf eine Restunschärfe von +/- te bestimmt werden.

**Uhrendrift**

In der Praxis muß stets mit Uhrendriften gerechnet werden:
relative Abweichung: clock_tolerance = t_drift/t,
wobei t_drift die maximal anzunehmende Toleranz darstellt.

Die anzunehmende Driftzeit nach einer Periode ist von der Periodendauer abhängig:
t_drift = t_period * clock_tolerance

Genauer als diese Driftzeit können die Uhren nicht sicher in Übereinstimmung gebracht werden.

**Zeitunschärfen:**

Driftunschärfe:

$$t\_drift = TS * TB * te * clock\_tolerance$$

$$= t\_bus * TS * clock\_tolerance \qquad [4.5]$$

Unschärfe durch phasenbedingte Telegrammlaufzeit:

$$t\_z = Z * te \quad mit -1 \leq Z < 1$$

$Z = +/- 1$ ergibt die Grenzen Unschärfe:

$$+/- t\_z\_max = +/- te \qquad [4.6]$$

**Bestimmung der Zykluszeiten**

Es wird angenommen, das folgende Parameter gegeben sind:
Buszyklus: $t\_bus = TB * te$
Uhrengenauigkeit: clock_tolerance
Gewünschte Zeitschärfe: $te \leq t\_max$
Gesucht ist die Sender bzw Empfängerzykluszeit $t\_sender = TS * te$
Mit der Beziehung aus Kap. 2.3:

$$te = ggt (t\_bus, t\_sender) \qquad [4.7]$$

lassen sich einfach Werte für TS bzw. t_sender ermitteln.
Praktisch gibt es jedoch 2 Einschränkungen:

1) Zu kleine Zykluszeiten TS belasten den Kommunikationssystem zu hoch

2) Zur Überwachung der Uhrenfunktion ist es sinnvoll, die mögliche Driftentstehung gegenüber der Phasenungenauigkeit klein zu halten. TS darf also nicht zu groß werden [4.5].

Es soll möglich sein, ein fehlerhaftes Wegdriften einer Uhr durch Verfolgung des Verlaufs der Offsetwerte frühzeitig zu erkennen.
Ist z.B. $t\_drift < 0.1 * te$, so darf sich der Offsetwert innerhalb der Zeitdauer von 10 Perioden nur um +/- te additiv zur erlaubten Drift von $1 * te$ bewegen.
Zusätzlich zu [4.7] soll also folgende Bedingung erfüllt werden:

$$TS < k * te / (t\_bus * clock\_tolerance) \qquad [4.8]$$

**4.1 Beispiel**

| | |
|---|---|
| *Buszyklus:* | $t\_bus$ = 64 *ms* |
| *Uhrengenauigkeit:* | *clock_tolerance* = 0.01 % |
| *Gewünschte Zeitschärfe:* | $te \leq 1$ *ms* |
| *Nebenbedingung:* | $k = 0.2$ |

*Mit $t\_bus$ = 64 ms und te = 1 ms folgt: TB = 64 = $2^6$*
*Jetzt muß ein zu TB teilerfremder Wert für TS gefunden werden, der die Bedingung erfüllt:*

$$TS < 0.2 * te / (t\_bus * clock\_tolerance)$$
$$< 0.2 * 1\ ms / (64\ ms * 10^{-4})$$
$$< 31.2$$

*TS = $5^2$ = 25 erfüllt obige Bedingungen*
*(Auch mit TS = 31, 29, 27, ... werden beide Bedingungen erfüllt)*

| | |
|---|---|
| *daraus folgt für den Senderzyklus:* | $t\_sender = TS * te = 25$ *ms* |
| *für die Periodendauer:* | $TS * TB * te = 1.6$ s |
| *und für die maximale phasenabhängige Unschärfe Z * te:* | $te\_max = +/- 0.5$ *ms* |

**Spezielles Ausführungsbeispiel**

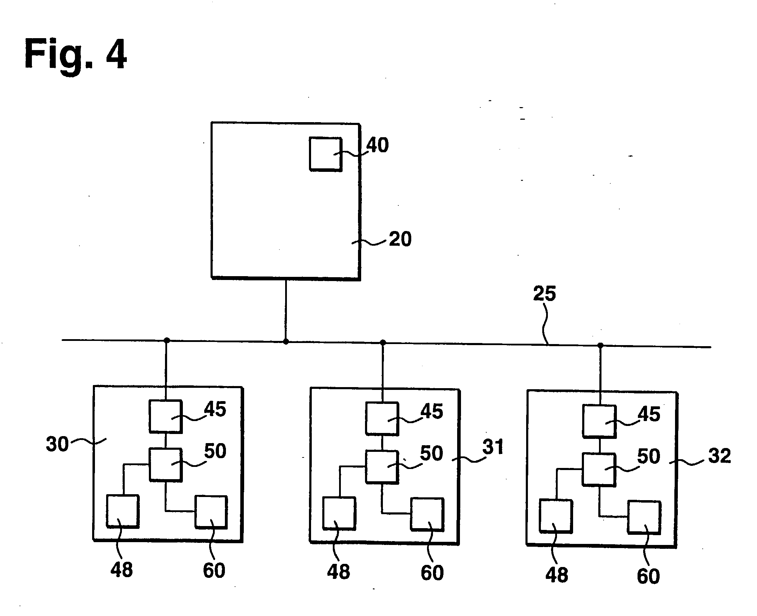

Fig. 4 zeigt einen Sender 20, einen Bus 25 und im Beispiel drei Empfänger 30, 31 und 32. Der Sender 20 enthält eine Echtzeituhr 40, die Zeitsignal erzeugt, die auf den Bus 25 ausgegeben werden. Die Empfänger sind alle gleich ausgebildet. Am Beispiel des Empfängers 30 wird erläutert, daß dieser eine Empfangseinrichtung 45 aufweist, sowie eine Echtzeituhr 48, außerdem eine Einrichtung 50, die beim Empfangen jedes Zeitsignals den augenblicklichen Stand der Echtzeituhr des Empfängers, also die momentane Empfängerzeit, registriert. Dabei wird, wie oben beschriebenen, berücksichtigt, welches Zeitsignal gerade empfangen wurde. Der Sendertakt, der Bustakt und der Empfangstakt jedes Empfängers sind so bemessen, wie dies oben bereits theoretisch ausgeführt wurde. Im Beispiel beträgt die Sendertaktperiode 25 msec, die Bustaktperiode 64 ms und die Empfängertaktperiode 25 ms. Wie bereits erwähnt, sind die Empfängertaktperioden zwar gleich lang, werden aber häufig oder sogar üblicherweise mit ihrem Beginn nicht zusammenfallen.

Bei der Anordnung der Fig. 4 ergibt sich unter Berücksichtigung der genannten Taktperioden eine Zeitspanne von 1,6 sec, nach deren Ablauf alle für die Ermittlung einer Verzögerungzeitperiode erforderlichen Zeitmessungen abgeschlossen sind, so daß anschließend die bereits genannte Mittelwertbildung in einer Recheneinrichtung 60 vorgenommen werden kann. Im Beispiel wird diese Zeitspanne einerseits als hinreichend kurz angesehen, um eine möglichst aktuelle Verzögerungszeit zu ermitteln, andererseits als lang genug, um die genannte Verzögerungszeit mit genügend großer Genauigkeit festzustellen.

**Patentansprüche**

**1.** Verfahren zum Synchronisieren der lokalen Uhren (40, 48) mehrerer Computereinheiten (20, 30, 31, 32), die ein Computersystem bilden, wobei die Computereinheiten (20, 30, 31, 32) über einen Bus (25) kommunizieren, wobei das Verfahren vorsieht,
daß eine erste, als Sender (20) dienende Computereinheit Zeitsignale, die jeweils eine Zeitsignatur aufweisen, unter Verwendung eines Senderzyklus mit einer Senderzykluszeitperiode t_sende zur Abholung durch den Bus (25) bereitstellt, daß der Bus (25) unter Verwendung eines Buszyklus mit einer Buszykluszeitperiode t_bus die Zeitsignale zu einer anderen, als Empfänger (30, 31, 32) dienende sendet,
daß der genannte Empfänger (30, 31, 32) diese Zeitsignale unter Verwendung eines Empfängerzyklus mit einer Empfängerzykluszeitperiode t_receiver liest, um eine Zeitdifferenz zwischen der lokalen Uhr (40) des Senders (20) und seiner lokalen Uhr (48) festzustellen,

daß die Zeitdifferenz zwischen den genannten lokalen Uhren (40, 48) als Durchschnittswert von Zeitdifferenzen einer spezifischen Anzahl der gelesenen Zeitsignale ermittelt wird, und daß diese ermittelte Zeitdifferenz zum Synchronisieren verwendet wird, **dadurch gekennzeichnet, dass** zwischen dem Erzeugen einer jeweiligen Zeitsignals im Sender (20) und dem Lesen des Zeitsignals im Empfänger (30, 31, 32) eine jeweils unterschiedliche Zeitverzögerung vorgesehen wird, derart, daß der Empfänger (30, 31, 32) aufeinander folgend empfangene Zeitsignale an einer Mehrzahl von unterschiedlichen Stellen seines Empfangszyklus liest, und

**dass** die variable Zeitverzögerung **dadurch** bewirkt wird, daß das Computersystem mit solchen Werten der Senderzykluszeitperiode t_sender, der Buszykluszeitperiode t_bus, und der Empfängerzykluszeitperiode t_receiver betrieben wird, daß aus der Gruppe t_sender, t_bus, und t_receiver mindestens zwei derart verschieden groß sind, daß sich eine gewünschte Anzahl von unterschiedlichen Zeitverzögerungen ergibt.

2. Verfahren nach Anspruch 1, **dadurch gekennzeichnet, daß** t_sender und t_receiver gleich groß sind.

3. Verfahren nach Anspruch 1 oder 2, **dadurch gekennzeichnet, daß** t_sender < t_bus ist.

4. Verfahren nach Anspruch 1, **dadurch gekennzeichnet, daß** die unterschiedliche Zeitverzögerung im Sender (20) durch unterschiedliches Verzögern der Bereitstellung von bereits erzeugten Zeitsignalen für den Bus (25) und/oder durch unterschiedliches Verzögern des Lesens von bereits empfangenen Zeitsignalen im Empfänger (30, 31, 32) vorgenommen wird.

5. Computersystem, **gekennzeichnet durch** seine Ausbildung zum Betrieb mit einem Verfahren nach einem der Ansprüche 1 bis 4.

6. Computersystem nach Anspruch 5, umfassend eine Computereinheit (20) mit einer Einrichtung zum unterschiedlichen Zeitverzögern beim Senden von Zeitsignalen durch unterschiedliches Verzögern der Bereitstellung von bereits erzeugten Zeitsignalen für die Übertragung über einen Bus (25).

7. Computersystem nach Anspruch 5 oder 6, umfassend eine Computereinheit (30, 31, 32) mit einer Einrichtung zum unterschiedlichen Zeitverzögern beim Empfangen von Zeitsignalen durch unterschiedliches Verzögern des Lesens von bereits empfangenen Zeitsignalen.

**Claims**

1. Process for synchronizing the local clocks (40, 48) of several computer units (20, 30, 31, 32) that form a computer system, whereby the computer units (20, 30, 31, 32) communicate by means of a bus (25), whereby as part of the process concerned a first computer unit operating as a transmitter (20) prepares, with use of a transmitter cycle with a cyclic transmitter period (t_transmitter), time signals, which in each case have a time signature, to be collected by means of the bus (25), whereby the bus (25) transmits the time signals to another computer unit serving as a receiver (30, 31, 32), whereby the said receiver (30, 31, 32) reads these time signals using a receiver cycle with a cyclic receiver period (t_receiver) in order to determine a time difference between the local clock (40) of the transmitter (20) and its local clock (48),

whereby the difference between the said local clocks (40, 48) is recorded as the average value of differences in time of a specific number of read time signals and

whereby this determined time difference is used for the synchronizing, whereby there is in each case a different time-delay between the production of a given time signal in the transmitter (20) and the reading of the time signal in the receiver (30, 31, 32) such that the receiver (30, 31, 32) reads successively received time signals at a number of different points in its receiver cycle, and

**characterized in that**

the variable time-delay is brought about by operating the computer system with values of the cyclic transmitter period (t_transmitter), the cyclic bus period (t_bus) and the cyclic receiver period (t_receiver) such that, of the (t_receiver), (t_transmitter), (t_bus) set, at least two of them are of a different magnitude such that a required number of different time-delays arises.

2. Process in accordance with claim 1, **characterized in that** t_transmitter and t_receiver are the same.

**3.** Process in accordance with claims 1 or 2, **characterized in that** t_transmitter < t_bus.

**4.** Process in accordance with claim 1,
**characterized in that** the differing time-delay is effected in the transmitter (20) through a different delay in making the already produced time signals available to the bus (25) and/or through differing delays in reading time signals that have already been received by the receiver (30, 31, 32).

**5.** Computer system, **characterized by** being formed to operate with a process in accordance with one of claims 1 to 4.

**6.** Computer system in accordance with claim 5, comprising a computer unit (20) with a device for differing the time-delay when sending time signals by differently delaying the provision of time signals, which have already been created, for transfer via a bus (25).

**7.** Computer system in accordance with claims 5 or 6, comprising a computer unit (30, 31, 32) with a device for varying time-delays when receiving time signals by differing delays in reading time signals that have already been received.


**Revendications**

**1.** Procédé pour la synchronisation des horloges locales (40, 48) de plusieurs ordinateurs (20, 30, 31, 32) formant un système informatique, dans lequel les ordinateurs (20, 30, 31, 32) communiquent via un bus (25), le procédé prévoyant qu'un premier ordinateur servant d'émetteur (20) fournit des signaux de temps qui présentent à chaque fois une signature de temps en utilisant un cycle d'émission ayant une période de cycle d'émetteur, t_émetteur, afin que le bus (25) les récupère ;
que le bus (25), en utilisant un cycle de bus ayant une période de cycle de bus, t_bus, envoie les signaux de temps à un autre ordinateur servant de récepteur (30, 31, 32) ; que le récepteur mentionné (30, 31, 32) lit ces signaux de temps en utilisant un cycle de récepteur ayant une période de cycle de récepteur, t_récepteur, afin d'établir une différence de temps entre l'horloge locale (40) de l'émetteur et son horloge locale (48) ; que la différence de temps entre les horloges locales mentionnées (40, 48) est déterminée en tant que valeur moyenne des différences d'un nombre spécifique des signaux de temps lus et que cette différence de temps établie est exploitée pour la synchronisation ; que le récepteur (30, 31, 32) lit les signaux de temps successifs reçus à plusieurs emplacements différents de son cycle de réception et est **caractérisé en ce que** le retard de temps variable est influencé par le fait que le système informatique est commandé par les valeurs de la période du temps de cycle d'émetteur, t_émetteur, de la période du temps de cycle du bus, t_bus et de la période du temps de cycle du récepteur, t_récepteur, **en ce que** parmi le groupe t_émetteur, t_bus et t_récepteur, au moins deux soient de valeur différente, de sorte qu'il se produise un nombre souhaité de retards de temps différents.

**2.** Procédé selon la revendication 1, **caractérisé en ce que** t_émetteur et t_récepteur sont d'une valeur[2] identique.

**3.** Procédé selon la revendication 1 ou 2, **caractérisé en ce que** t_émetteur < t_bus.

**4.** Procédé selon la revendication 1, **caractérisé en ce que** le retard de temps différent dans l'émetteur (20) est initié par un retard différent de la mise à disposition des signaux de temps déjà produits pour le bus (25) et/ou par un retard différent de la lecteur des signaux de temps déjà reçus dans le récepteurs (30, 31, 32).

**5.** Système informatique **caractérisé par** sa construction lui permettant de fonctionner avec un procédé selon l'une des revendications 1 à 4.

**6.** Système informatique selon la revendication 5, comprenant un ordinateur (20) muni d'un dispositif garantissant un retard de temps différent lors de l'envoi des signaux de temps avec un retard différent de la mise à disposition des signaux de temps déjà produits, pour la transmission via un bus (25).

**7.** Système informatique selon la revendication 5 ou 6, comprenant un ordinateur (30, 31, 32) muni d'un dispositif garantissant un retard de temps différent lors de la réception des signaux de temps avec un retard différent de la lecture des signaux de temps déjà reçus.

# Fig. 1

**Prinzip: Telegrammlaufzeiten**

# Fig. 2

EP 1 103 882 B1

# Fig. 3

Sender (Bus)

Receiver

(t_sender > t_receiver)

t_period

t_sender

t_delay_5

t_bus

t_delay_4

gap

t_delay_3

t_delay_2

gap

t_x

t_delay_1

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **K. ARVIND.** *IEEE Transactions on parallel and distributed systems,* Mai 1994, vol. 5 (5), 474-487